# EUROPÄISCHE PATENTSCHRIFT

(11) **EP 2 197 715 B1**
(45) Veröffentlichungstag und Bekanntmachung des Hinweises auf die Patenterteilung: **21.09.2011**
(21) Anmeldenummer: 08773694.8
(22) Anmeldetag: 26.06.2008
(51) Int. Cl.: B60T 7/20, B60T 13/68

(54) **FESTSTELLBREMSMODULATOR SOWIE VERWENDUNG EINES BREMSMODULATORS ALS FESTSTELLBREMSMODULATOR**
PARKING BRAKE MODULATOR AND USE OF A BRAKE MODULATOR AS A PARKING BRAKE MODULATOR
MODULATEUR DE FREINAGE DE STATIONNEMENT ET UTILISATION D'UN MODULATEUR DE FREINAGE COMME MODULATEUR DE FREINAGE DE STATIONNEMENT

(30) Priorität: 05.10.2007 DE 102007047692
(43) Veröffentlichungstag der Anmeldung: 23.06.2010
(73) Patentinhaber: WABCO GmbH, 30453 Hannover (DE)
(72) Erfinder: FÖRSTER, Henning, 31171 Nordstemmen (DE); ROSENDAHL, Hartmut, 30167 Hannover (DE); STRACHE, Wolgang, 30966 Hemmingen (DE)
(74) Vertreter: Lauerwald, Jörg
(86) Internationale Anmeldenummer: PCT/EP2008/005218
(87) Internationale Veröffentlichungsnummer: WO 2009/046779

(56) Entgegenhaltungen:
- EP-A- 1 914 137
- DE-A1- 19 752 147
- DE-B3-102005 019 479

## Beschreibung

Die Erfindung betrifft einen Feststellbremsmodulator zur Steuerung einer Feststellbremsfunktion von Bremsen eines Fahrzeugs gemäß dem Oberbegriff von Anspruch 1 sowie die Verwendung eines Bremsmodulators eines elektronischen Bremssystems als Feststellbremsmodulator nach Anspruch 13.

Ein Feststellbremsmodulator dient zur Aussteuerung wenigstens eines pneumatischen Drucks zur Steuerung der Feststellbremsfunktion von Bremsen eines Fahrzeugs. In einer herkömmlichen Ausbildung stellt ein Feststellbremsmodulator zwei ausgesteuerte Drücke bereit. Er weist zu diesem Zweck eine erste Druckluftleitung zu einem ersten Druckluftausgang und eine zweite Druckluftleitung zu einem zweiten Druckluftausgang auf. Darüber hinaus weist dieser bekannte Feststellbremsmodulator eine erste und eine zweite Ventileinrichtung auf, die jeweils elektrisch steuerbar und elektromagnetisch betätigbar sind. Bei unbestromter erster und zweiter Ventileinrichtung verbinden diese beiden Ventileinrichtungen den ersten und den zweiten Druckluftausgang mit einer Entlüftung.

Die erste und die zweite Ventileinrichtung weisen jeweils wenigstens einen bestromten Schaltzustand auf, welcher die erste bzw. die zweite Druckluftleitung mit einem Drucklufteingang des Feststellbremsmodulators verbindet. Die erste und die zweite Druckluftleitung sind somit über die erste bzw. die zweite bestromte Ventileinrichtung mit der am Drucklufteingang bereitgestellten Druckluft belüftbar.

Die am ersten Druckluftausgang bereitgestellte Druckluft wird Federspeicherbremszylindern zur Breitstellung einer Feststellbremsfunktion zugeführt. Die Druckluft am zweiten Druckluftausgang wird einem ebenfalls mit Federspeicherbremszylindern ausgestattetem Anhängefahrzeug zugeführt. Jeder dieser Federspeicherbremszylinder weist Federspeicherteile auf. Im unbelüfteten Zustand des Federspeicherteils betätigt der Federspeicherbremszylinder eine Bremse. Diese Art der Bremse wird als Feststellbremse bezeichnet. Bei belüftetem Federspeicherteil ist diese Bremse gelöst. Wenn das Fahrzeug abgestellt ist, sollen die Bremsen eingelegt sein. Folglich sind die Federspeicherteile und damit die erste und die zweite Druckluftleitung im Feststellbremsmodulator bei einem fahrenden Fahrzeug zu belüften und bei einem abgestellten Fahrzeug zu entlüften. Die erste und die zweite Druckluftleitung sind hierbei bei unbestromter erster und zweiter Ventileinrichtung entlüftet, weil ein Fahrzeug auch bei einem Stromausfall noch abbremsbar sein muss bzw. Bremsen eines abgestellten Fahrzeugs bspw. bei einer entleerten Fahrzeugbatterie sich nicht lösen sollen. Im normalen Fahrbetrieb dieses Fahrzeugs soll der Feststellbremsmodulator keine Bremse einlegen. Die erste und die zweite Ventileinrichtung belüften die erste und die zweite Druckluftleitung und die Federspeicherteile der zugeordneten Federspeicherbremszylinder. Zum Belüften dieser Federspeicherteile müssen herkömmlicherweise sowohl die erste als auch die zweite Ventileinrichtung bestromt werden.

Ein derartiger bekannter Feststellbremsmodulator hat daher den Nachteil, dass er im Fahrbetrieb eines Fahrzeugs, d.h. bei belüfteter erster und zweiter Druckluftleitung, relativ viel elektrische Energie benötigt. Ein hoher Energieverbrauch belastet eine Batterie des Fahrzeugs und führt. Diese Batterie muss zudem während der Fahrt mittels eines Generators verstärkt aufgeladen werden. Dies wiederum führt zu einem erhöhten Kraftstoffverbrauch des Fahrzeugs. Dies ist nachteilig.

DE 10 2005 019 479 B3 offenbart ein Anhängerbremsventil, welches ein Gehäuse aufweist, das einen Eingangsanschluss für eine Vorratsleitung, einen Eingangsanschluss für eine Bremsleitung, einen Anschluss für einen Vorratsbehälter, einen Ausgangsanschluss für einen Bremssteuerdruck für Betriebsbremszylinder und einen Ausgangsanschluss für eine zu Federspeicherbremszylindern führende Löseleitung besitzt. Im Gehäuse ist eine Notbremseinrichtung angeordnet, die eine Kolbenanordnung mit einem vom Druck im Vorratsbehälter beaufschlagten Schaltkolben und ein der Löseleitung zu den Federspeicherbremszylindern zugeordnetes Rückschlagventil aufweist und die bei druckloser Vorratsleitung den Vorratsbehälter mit dem Ausgangsanschluss für den Bremssteuerdruck verbindet. Im Gehäuse des Anhängerbremsventils sind ein manuell betätigbares Löseventil für die Federspeicherbremszylinder, ein willkürlich betätigbares Schaltventil mit den Stellungen HEBEN; SENKEN; FAHRT und STOP und/oder ein eine bewegliche Wand aufweisendes Überströmventil zum Trennen der Bremsanlage von Nebenverbrauchern integriert angeordnet ist.

Der Erfindung liegt daher das Problem zugrunde, den Energieverbrauch eines derartigen Feststellbremsmodulators während des Fahrbetriebs zu verringern.

Die Erfindung löst dieses Problem durch einen Feststellbremsmodulator gemäß Anspruch 1 sowie durch die Verwendung eines Bremsmodulators als Feststellbremsmodulator gemäß Anspruch 13.

Der Feststellbremsmodulator der Erfindung weist neben den eingangs genannten zwei Ventileinrichtungen eine dritte Ventileinrichtung auf. Diese dritte Ventileinrichtung ist in einer gemeinsamen Verbindung der ersten und der zweiten Ventileinrichtung zu einer gemeinsam genutzten Entlüftungseinrichtung angeordnet. Die erste und die zweite Druckluftleitung sind folglich über die unbestromte erste bzw. zweite Ventileinrichtung und die dritte Ventileinrichtung mit der Entlüftungseinrichtung verbindbar und über diese entlüftbar. Die dritte Ventileinrichtung ist hierbei unbestromt, um ein Entlüften der ersten und der zweiten Druckluftleitung bei einem Stromausfall sicherzustellen.

Die Erfindung hat erkannt, dass sich der Stromverbrauch des Feststellbremsmodulators im Fahrbetrieb durch die zusätzliche dritte Ventileinrichtung im Vergleich zu einem bekannten Feststellbremsmodulator nicht erhöht, sondern sogar verringern lässt. Bei nach wie vor unbestromter erster und zweiter Ventileinrichtung verbindet nämlich die bestromte dritte Ventileinrichtung die erste und die zweite Druckluftleitung mit dem Drucklufteingang des Feststellbremsmodulators. Die erste und die zweite Druckluftleitung sind folglich bei unbestromter erster und zweiter Ventileinrichtung und lediglich bestromter dritter Ventileinrichtung, insbesondere bei lediglich einem bestromten Ventil dieser dritten Ventileinrichtung, mit der am Drucklufteingang des Feststellbremsmodulators bereitgestellten Druckluft belüftbar. Federspeicherteile von Federspeicherbremszylindern sind dann belüftet. Die Bremsen des Fahrzeugs sind mittels der Federspeicher von Federspeicherbremszylindern nicht eingelegt und das Fahrzeug kann ungebremst gefahren werden.

Die Erfindung hat erkannt, dass verschiedene Bremsanlagenkomponenten über die unbestromte erste bzw. zweite Ventileinrichtung belüftet werden können, und dennoch ein Entlüften dieser Bremskreise bei einem Stromausfall möglich ist, wenn dieser ersten und zweiten Ventileinrichtung gemeinsam die dritte Ventileinrichtung vorgeschaltet ist.

Mittels der dritten Ventileinrichtung können die erste und die zweite Druckluftleitung gemeinsam belüftet oder entlüftet werden. Mittels der ersten und der zweiten Ventileinrichtung sind darüber hinaus pneumatische Drücke in der ersten und zweiten Druckluftleitung unabhängig voneinander aussteuerbar. Diese ausgesteuerten Drücke können sich folglich voneinander unterscheiden.

Vorzugsweise ist die dritte Ventileinrichtung ein 3/2-Wege-Magnetventil. Mittels dieses 312-Wege-Magnetventils kann die geforderte Funktionalität der dritten Ventileinrichtung, die erste und die zweite Ventileinrichtung wahlweise mit einem Druckluftvorrat oder einer Einrichtung zur Entlüftung zu verbinden, kostengünstig bereitgestellt werden. Das 3/2-Wege-Magnetventil weist lediglich eine Spule und lediglich einen Magnetanker auf. Die erste und die zweite Druckluftleitung sind folglich in Erwiderung auf ein einfaches Bestromen dieser Spule belüftbar. Ein Energieverbrauch aufgrund des Bestromens dieses 3/2-Wege-Magnetventils ist vergleichsweise gering. Die Verwendung eines 3/2-Wege-Magnetventils als dritte Ventileinrichtung spart somit Energie und Kosten.

Vorteilhafterweise sind die erste und die zweite Druckluftleitung über die dritte Ventileinrichtung nicht schnell sondern gedrosselt entlüftbar. Dies hat den Vorteil, dass bei einem Stromausfall die erste und die zweite Druckluftleitung gedrosselt entlüftet und infolge dessen die Bremsen der Federspeicherbremszylinder vergleichsweise langsam eingelegt werden. Ein plötzlich und unvermutet auftretendes Blockieren von Rädern dieses Fahrzeugs aufgrund eines Stromausfalls kann durch die gedrosselte Entlüftung verhindert werden. Die Vorrichtung zur gedrosselten Entlüftung in dem erfindungsgemäßen Feststellbremsmodulator erhöht folglich die Sicherheit im Fahrbetrieb eines diesen Feststellbremsmodulator aufweisenden Fahrzeugs.

Eine gedrosselte Entlüftung wird durch eine kleine Öffnung, bspw. eine Bohrung oder eine spaltartige Blende in einem Gehäuse des Feststellbremsmodulators erreicht, durch welche die Druckluft zur Entlüftung strömen muss. Diese Öffnung weist einen vergleichsweise geringen Querschnitt auf, um der hindurchströmenden Druckluft einen signifikanten Widerstand entgegenzusetzen. Alternativ kann die Öffnung auch einen größeren Querschnitt aufweisen, wenn die zu entlüftende Luftmenge bspw. durch eine Öffnung im Relaiskolben eines ggf. vorhandenen Relaisventils vergrößert wird. Die größere Öffnung hat den Vorteil, dass sie sich weniger leicht zusetzen kann und folglich eine Fehleranfälligkeit bei der Entlüftung geringer ist.

Zur Aussteuerung des pneumatischen Drucks in der ersten bzw. zweiten Druckluftleitung ist die erste bzw. zweite Ventileinrichtung vorzugsweise als 3/3-Wege-Magnetventil ausgebildet, welches einen unbestromten und zwei mit unterschiedlichen Strömen bestromte Schaltzustände, nämlich den unbestromten Schaltzustand "Belüften/Entlüften" und die bestromten Schaltzustände "Halten" und "Entlüften" aufweist. In einem ersten dieser bestromten Schaltzustände kann der pneumatische Druck in der ersten bzw. zweiten Druckluftleitung gehalten und in einem zweiten dieser zwei bestromten Schaltzustände kann dieser pneumatische Druck durch ein Entlüften der ersten bzw. zweiten Druckluftleitung über die erste bzw. zweite Ventileinrichtung abgesenkt werden. Mittels dieser bestromten Schaltzustände lassen sich pneumatische Drücke unterhalb des am Drucklufteingang bereitgestellten pneumatischen Drucks aussteuern und halten. Eine Feststellbremsfunktion kann somit dosiert eingesetzt werden. Dabei kann ein ausgesteuerter pneumatischer Druck ohne Verbrauch von Druckluft gehalten werden.

Das 3/3-Wege-Magnetventil ist vorteilhafterweise als Doppelankermagnetventil ausgeführt. Ein Doppelankermagnetventil weist nämlich eine vergleichsweise kompakte Bauform auf. Die drei Schaltzustände "Belüften/Entlüften", "Halten" und "Entlüften" sind mittels dieses platzsparenden, materialsparenden und energiesparenden Doppelankermagnetventils erzielbar. Hierdurch kann der Feststellbremsmodulator insgesamt kompakt gehalten werden und unter vergleichsweise geringem Materialeinsatz gebaut werden. Der Feststellbremsmodulator ist damit kostengünstig herstellbar und vergleichsweise leicht in einem Fahrzeug, insbesondere auch bei engen Platzverhältnissen, verbaubar.

In einer vorteilhaften Weiterbildung der Erfindung weist der Feststellbremsmodulator ein oder mehrere Relaisventile auf. Ein Relaisventil befindet sich dabei in der ersten bzw. zweiten Druckluftleitung. Über die erste bzw. zweite Ventileinrichtung ist der ersten bzw. zweiten Druckluftleitung ein ausgesteuerter Druck nämlich nur mit vergleichsweise geringen Luftmengen bereitstellbar. Sowohl die erste und die zweite Ventileinrichtung als auch die erste und die zweite Druckluftleitung sind nämlich vergleichsweise klein ausgebildet, insbesondere weisen die erste und die zweite Druckluftleitung nur einen vergleichsweise geringen Querschnitt auf. Die erste und die zweite Ventileinrichtung und die erste und die zweite Druckluftleitung setzen einer durch sie hindurchströmenden Luft deshalb einen vergleichsweise hohen Widerstand entgegen. Das Relaisventil stellt bezogen auf eine Zeit eine größere Luftmenge mit dem in der ersten bzw. zweiten Druckluftleitung vorliegenden pneumatischen Druck als diese erste bzw. zweite Druckluftleitung selbst bereit. Folglich können in einer Zeiteinheit mittels des Relaisventils größere Luftmengen zum Belüften eines Federspeicherteils bereitgestellt werden. Ein geforderter pneumatischer Druck kann im Federspeicherteil schneller aufgebaut werden, insbesondere sind mögliche Abweichungen von einem gewünschten auszusteuernden Druck vergleichsweise gering.

Ein weiterer Vorteil eines Relaisventils, welches zur Vergrößerung der dem Anhängefahrzeug bereitgestellten Luftmenge vorgesehen ist, besteht neben dem schnelleren Be- und Entlüften der Federspeichermembranen der Federspeicherbremszylinder des Anhängefahrzeugs darin, dass das erstmalige Befüllen des Druckluftvorratbehälters des Anhängefahrzeugs bedeutend schneller erfolgt. Aus Kostengründen könnte jedoch auf dieses Relaisventil verzichtet werden. In den Feststellbremsmodulator ist ggf. dann nur ein Relaisventil integriert, während an der Stelle eines fehlenden zweiten Relaisventils ggf. ein Platzhalter verbaut ist.

In einer vorteilhaften Weiterbildung der Erfindung weist der Feststellbremsmodulator ein oder mehrere, insbesondere zwei, insbesondere in einen Deckel des Feststellbremsmodulators integrierte, Drucksensoren auf. Mittels dieser Drucksensoren sind pneumatische Drücke an einer oder an mehreren Stellen im Feststellbremsmodulator messbar. Insbesondere ist mittels eines Drucksensors der pneumatische Druck an dem wenigstens einen Drucklufteingang und/oder dem ersten und/oder dem zweiten Druckluftausgang messbar. Für die Steuerung der Drücke an den Druckluftausgängen des Feststellbremsmodulators müssen Messwerte wenigstens dieser Drücke vorliegen. Hierfür müssen Drucksensoren vorgesehen werden. Die Integration dieser Drucksensoren in den Feststellbremsmodulator spart Kosten gegenüber einer aufgelösten Bauweise. Es müssen nämlich keine Druckluftleitungen außerhalb des Feststellbremsmodulators zu diesen Drucksensoren verlegt sein. Lediglich elektrische Leitungen zur Übertragung von Messwerten an eine außerhalb des Feststellbremsmodulators befindlicher Steuereinrichtung müssen vorgesehen sein. Zudem wird eine Fehleranfälligkeit der Druckmessung durch die Integration der Drucksensoren in den Feststellbremsmodulator bzw. in einen Deckel des Feststellbremsmodulators signifikant verringert und die Systemverfügbarkeit verbessert.

Vorteilhafterweise ist in den erfindungsgemäßen Feststellbremsmodulator ein Doppelrückschlagventil integriert oder separat von Feststellbremsmodulator angeordnet. Dieses Doppelrückschlagventil weist zwei Eingänge und einen Ausgang auf. Jeder dieser Eingänge ist, ggf. über jeweils einen Eingang des Feststellbremsmodulators, mit einem Druckluftvorratsbehälter verbunden. Das Doppelrückschlagventil verhindert einen Druckausgleich zwischen dem ersten und dem zweiten Druckluftvorratsbehälter über das Doppelrückschlagventil, weil es ein Zurückströmen von Druckluft durch einen seiner Eingänge unterbindet. Aus diesem Grund verhindert das Doppelrückschlagventil auch ein Entlüften der ersten oder der zweiten Druckluftleitung in Richtung der Druckluftvorratsbehälter. Über das Doppelrückschlagventil sind somit die erste und die zweite Druckluftleitung mit dem höheren Druck der an den beiden Drucklufteingängen des Doppelrückschlagventils bzw. des Feststellbremsmodulators anliegenden Drücke belüftbar. Eine Integration des Doppelrückschlagventils in den Feststellbremsmodulator spart Kosten im Vergleich zu einer aufgelösten Bauweise.

In einer vorteilhaften Weiterbildung der Erfindung weist der Feststellbremsmodulator ein integriertes oder separat angeordnetes Wechselventil auf, das mit der den ersten pneumatischen Druck führenden ersten Druckluftleitung bzw. der den zweiten pneumatischen Druck führenden zweiten Druckluftleitung verbunden ist. Diesem Wechselventil wird ferner ein ausgesteuerter Druck einer Bremspedaleinrichtung zum Betätigen einer Betriebsbremsfunktion bereitgestellt. Dieser ausgesteuerte Druck wird ferner Bremszylindern bzw. Membranteilen von kombinierten Federspeicher-/Membranbremszylindern zum Betätigen von Bremsen und zur Realisierung einer Betriebsbremse bereitgestellt. Das Wechselventil wählt den höheren dieser beiden Drücke, nämlich des ausgesteuerten Drucks und des ersten bzw. zweiten pneumatischen Drucks, aus und stellt diesen höheren Druck wenigstens einem Federspeicherbremszylinder bereit. Der Druck wird deshalb Membranteilen von Bremszylindern zum Betätigen von Bremsen bereitgestellt.

Das Wechselventil hat hierbei die Aufgabe, eine Überbeanspruchung von Bremsen, welche mittels kombinierter Federspeicherbremszylinder betätigbar sind, zu vermeiden. Ein kombinierter Federspeicherbremszylinder weist nämlich den Federspeicherteil und den Membranteil auf. Dieser kombinierte Federspeicherbremszylinder betätigt eine Bremse mittels der Betriebsbremsfunktion, wenn der Membranteil belüftet wird, und mittels der Feststellbremsfunktion, wenn der Federspeicherteil entlüftet wird. Ein Belüften des Membranteils bei einem entlüfteten Federspeicherteil würde folglich Kräfte, welche über den Membranteil und welche über die Federspeicher auf die Bremse wirken, addieren. Das Wechselventil hingegen belüftet den Federspeicherteil des Bremszylinders mit dem größeren der an seinen Eingängen anliegenden Drücke. Somit sorgt das Wechselventil dafür, dass der pneumatische Druck im Federspeicherteil des Bremszylinders immer mindestens so groß ist wie der pneumatische Druck im Membranteil. Eine Addition von Kräften, welche die Bremse überbeanspruchen könnte, wird somit vermieden.

Eine Integration des Wechselventils in den Feststellbremsmodulator spart Kosten gegenüber einer aufgelösten Bauweise. Die Herstellung des Feststellbremsmodulators mit integriertem Wechselventil ist kostengünstiger als die separate Herstellung eines Feststellbremsmodulators und eines Wechselventils. Zudem verringern sich die Kosten einer Montage des Feststellbremsmodulators mit dem integrierten Wechselventil im Vergleich zu einer aufgelösten Bauweise, da weniger Komponenten in kürzerer Zeit montiert werden können.

In einer Ausführungsform der Erfindung ist ein Zugwagenschutzventil in den Feststellbremsmodulator integriert oder separat angeordnet. Dieses Zugwagenschutzventil ist mit der zweiten Druckluftleitung bzw. dem zweiten Druckluftausgang verbunden. Es ist zudem mit dem ausgesteuerten Druck der Bremspedaleinrichtung verbunden.

In dieser Ausführungsform weist der Feststellbremsmodulator einen Steuerdruckausgang auf, an dem ein ausgesteuerter Druck zur Belüftung von Membranteilen von Bremszylindern eines Anhängefahrzeugs, d.h. ein Steuerdruck zur Bereitstellung einer Betriebsbremsfunktion für das Anhängefahrzeug, bereitgestellt wird.

Das Zugwagenschutzventil unterbricht die Verbindung von der Bremspedaleinrichtung zum Anhängefahrzeug automatisch ab, sobald der pneumatische Druck am zweiten Druckluftausgang des Feststellbremsmodulators unter einen vorbestimmten Schwellenwert sinkt. Das Zugwagenschutzventil kann hierbei bspw. ein pneumatisch oder elektropneumatisch schaltbares Ventil, insbesondere 2/2-Wege-Ventil, sein.

Das Anhängefahrzeug ist über eine Steuerdruckleitung und über eine Vorratsdruckleitung mit dem im Zugfahrzeug verbauten und im Feststellbremsmodulator integrierten Zugwagenschutzventil verbunden. Bei einem Abreißen dieser beiden Druckluftleitungen sperrt das Zugwagenschutzventil in Erwiderung auf einen Druckabfall am zweiten Druckluftausgang des Feststellbremsmodulators die Verbindung vom Steuerdruckeingang zum Steuerdruckausgang des Feststellbremsmodulators. Ein Entweichen von Druckluft des ausgesteuerten Druckes der Bremspedaleinrichtung ist dann nicht mehr möglich. Hierdurch wird einem Versagen der Betriebsbremsfunktion des Zugfahrzeugs entgegengewirkt. Bei einem Entweichen von Druckluft für eine Betriebsbremsfunktion des Anhängefahrzeugs könnte nämlich auch für eine Betriebsbremsfunktion des Zugfahrzeugs kein ausreichender pneumatischer Druck mehr bereitstellbar sein.

Die Integration des Zugwagenschutzventils in den Feststellbremsmodulator ist vorteilhaft, da die integrierte Bauweise im Vergleich zu einer aufgelösten Bauweise Kosten spart.

Die Erfindung verwendet bevorzugt einen herkömmlichen Bremsmodulator zur Steuerung einer Feststellbremsfunktion. Dieser Bremsmodulator wird üblicherweise zur Steuerung einer Betriebsbremsfunktion von Bremsen eines Anhängefahrzeugs verwendet. Dieser Bremsmodulator ist Teil eines elektronischen Bremssystems. Die erste und zweite Ventileinrichtung steuern in diesem Fall nämlich pneumatische Drücke für zwei Betriebsbremskreise aus. Die dritte Ventileinheit dient hierbei zum Umschalten auf einen Redundanzkreis bei einem Stromausfall. Bei unbestromter erster Ventileinrichtung und unbestromter zweiter Ventileinrichtung werden die erste und die zweite Druckluftleitung nämlich entweder bei bestromter dritter Ventileinrichtung mit einem Druckluftvorratseingang verbunden oder bei unbestromter dritter Ventileinrichtung mit einem Eingang verbunden, welcher einen Redundanzdruck bereitstellt. Dieser Redundanzdruck ist ein manuell ausgesteuerter Druck, mittels dessen eine Betriebsbremsfunktion durch ein Belüften von Membranteilen von Bremszylindern mittels des an dem ersten Druckluftausgang und des an dem zweiten Druckluftausgang bereitgestellten pneumatischen Drucks möglich ist.

Bei der Verwendung dieses Bremsmodulators als Feststellbremsmodulator ist dieser Bremsmodulator baulich derart umgestaltet, dass der Eingang, an welchem üblicherweise ein Redundanzdruck der dritten Ventileinrichtung bereitgestellt wird, nun als Ausgang verwendet wird. Dieser Ausgang ist als Einrichtung zur Entlüftung ausgestaltet. Hierdurch verändert sich die Funktionalität des Bremsmodulators derart, dass er als Feststellbremsmodulator bei einem Stromausfall nicht die Belüftung der ersten und der zweiten Druckluftleitung über einen Redundanzkreis aufrechterhält sondern im Gegenteil die erste und zweite Druckluftleitung über den zum Entlüftungsausgang umgestalteten Eingang für den Redundanzdruck entlüftet werden. Ferner sind die Druckluftausgänge nun nicht mehr wie bei der ursprünglichen Verwendung des Bremsmodulators zur Verbindung mit Membranteilen von Bremszylindern vorgesehen. Vielmehr dienen diese beiden Druckluftausgänge bei der Verwendung als Feststellbremsmodulator nunmehr dazu, Federspeicherteile von Federspeicherbremszylindern zu belüften oder zu entlüften.

Die Verwendung des Bremsmodulators als Feststellbremsmodulator hat den Vorteil, dass der Bremsmodulator ein bewährtes Bauteil ist, welches einen hohen Entwicklungstand erreicht hat und zuverlässig arbeitet. Mit nur wenigen Veränderungen lässt sich dieser bewährte Bremsmodulator vorteilhaft als Feststellbremsmodulator verwenden. Mit nur geringfügigen Änderungen an dem bekannten Bremsmodulator wird bei ansonsten gleichbleibender Verschaltung der ersten, der zweiten und der dritten Ventileinrichtung untereinander die notwendigerweise abweichende Funktionalität des Feststellbremsmodulators im Vergleich zum Bremsmodulator erreicht. Bei einem Bremsmodulator sollen nämlich die erste und die zweite Druckluftleitung auch bei einem Stromausfall belüftbar sein, um eine Betriebsbremsfunktion auch während eines Stromausfalls erreichen zu können. Bei einem Feststellbremsmodulator soll dagegen eine Feststellbremsfunktion bei einem Stromausfall erreicht werden. Diese wird jedoch gerade bei entlüfteter erster und zweiter Druckluftleitung erreicht. Deshalb sollen bei einem Feststellbremsmodulator die erste und die zweite Druckluftleitung bei einem Stromausfall entlüftet werden.

Die Verwendung des Bremsmodulators als Feststellbremsmodulator anstelle eines bekannten Feststellbremsmodulators hat den Vorteil, dass im Fahrbetrieb eines den erfindungsgemäßen Bremsmodulator aufweisenden Fahrzeugs lediglich eine Ventileinrichtung, nämlich die dritte Ventileinrichtung zu bestromen ist. Hierdurch wird im Fahrbetrieb elektrische Energie im Vergleich zu der Verwendung bekannter Feststellbremsmodulatoren gespart. Dies spart Kosten im Betrieb. Weitere Kosten werden bei der Herstellung des Feststellbremsmodulators gespart, weil der Bremsmodulator bereits in großen Stückzahlen und deshalb kostengünstig produziert wird.

Der Feststellbremsmodulator braucht nicht komplett separat hergestellt zu werden. Vielmehr kann der Bremsmodulator so wie er ist als Feststellbremsmodulator verwendet werden, wenn an dem Eingang des Bremsmodulators, an welchem diesem Bremsmodulator ein Redundanzdruck bereitgestellt wird, eine Einrichtung zur Entlüftung angebracht wird. Alternativ sind Veränderungen bereits im Bremsmodulator bzw. Feststellbremsmodulator selbst vorzunehmen. Dann wird bspw. ein zur Entlüftung modifiziertes Gehäuse verwendet oder ein zusätzliches Bauteil zur Entlüftung in dieses Gehäuse eingesetzt. Zahlreiche Teile des Bremsmodulators sind jedoch identisch mit Teilen des Feststellbremsmodulators. Insbesondere die erste Ventileinrichtung, die zweite Ventileinrichtung und die dritte Ventileinrichtung sind unverändert sowohl im Bremsmodulator als auch in dem als Feststellbremsmodulator verwendeten Bremsmodulator verbaut. Auch die Verschaltung zwischen diesen Ventileinrichtungen bleibt bei der geänderten Verwendung unverändert.

Der vorstehend erläuterte Feststellbremsmodulator ist Teil einer Bremsanlage. Diese Bremsanlage weist eine Steuereinrichtung auf, welche mit elektrischen Leitungen mit dem Bremsmodulator verbunden ist und den Feststellbremsmodulator über diese elektrischen Leitungen steuert. Die Steuereinrichtung erhält hierzu ihrerseits Steuerbefehle von Eingabegeräten. Insbesondere erhält sie Steuersignale zum Betätigen einer Feststellbremsfunktion.

Die Bremsanlage weist zudem wenigstens einen ersten und einen zweiten Luftdruckvorratsbehälter auf. Über diesen ersten und diesen zweiten Luftdruckvorratsbehälter ist dem Feststellbremsmodulator über den wenigstens einen Luftdruckeingang Druckluft bereitstellbar.

Zudem weist die Bremsanlage Bremsen auf, welche ihrerseits Federspeicherbremszylinder mit belüftbaren Federspeicherteilen aufweisen. Wenigstens der Federspeicherteil einer ersten Bremse ist mittels des am ersten Druckluftausgang bereitgestellten pneumatischen Drucks belüftbar und wenigstens der Federspeicherteil einer zweiten Bremse ist mittels des am zweiten Druckluftausgang bereitgestellten pneumatischen Drucks belüftbar. Sowohl der Federspeicherteil der ersten Bremse als auch der Federspeicherteil der zweiten Bremse kann zudem über den ersten Druckluftausgang bzw. den zweiten Druckluftausgang entlüftet werden.

Vorzugsweise ist die eine erste Bremse dabei eine Bremse eines Zugfahrzeugs und die eine zweite Bremse eine Bremse eines an dem Zugfahrzeug angekoppelten Anhängefahrzeugs. In diesem Fall sind die Bremsdrücke zum Betätigen der Feststellbremsfunktion des Zugfahrzeugs und des Anhängefahrzeugs mittels der ersten Ventileinrichtung und der zweiten Ventileinrichtung getrennt voneinander aussteuerbar. Dies ist bspw. von Vorteil, wenn die Federspeicherbremszylinder des Zugfahrzeugs und des Anhängefahrzeugs von unterschiedlicher Bauart sind. Auch kann es gewünscht sein, dass bspw. das Anhängefahrzeug stärker mittels entlüfteter Federspeicherteile von Federspeicherbremszylindern festgestellt oder auch mittels dieser Feststellbremsfunktion abgebremst werden soll als das Zugfahrzeug. Darüber hinaus ist ein Anhängefahrzeug auch nicht immer an ein Zugfahrzeug angekoppelt. Wenn kein Anhänger an ein Zugfahrzeug mit der erfindungsgemäßen Bremsanlage angekoppelt ist, kann vorteilhaft eine Belüftung der ersten bzw. zweiten Druckluftleitung und damit ein Entweichen von Druckluft über den ersten bzw. zweiten Druckluftausgang vermieden werden. In diesem Fall ist die erste bzw. zweite Ventileinrichtung zu bestromen, um die Verbindung der ersten bzw. zweiten Druckluftleitung zur dritten Ventileinrichtung und damit auch zu dem wenigstens einen Drucklufteingang zu unterbrechen.

Weitere vorteilhafte Ausführungsformen ergeben sich aus den Unteransprüchen sowie aus dem anhand der beigefügten Zeichnung näher erläuterten Ausführungsbeispiel. In der Zeichnung zeigen:
- Fig. 1: einen Ausschnitt einer Bremsanlage mit einem Feststellbremsmodu- lator in vereinfachter schematischer Darstellung gemäß einem Aus- führungsbeispiel der Erfindung und
- Fig. 2: einen Ausschnitt einer Bremsanlage im Überblick mit einem verein- facht dargestellten Feststellbremsmodulator in vereinfachter schema- tischer Darstellung gemäß einem Ausführungsbeispiel der Erfindung.

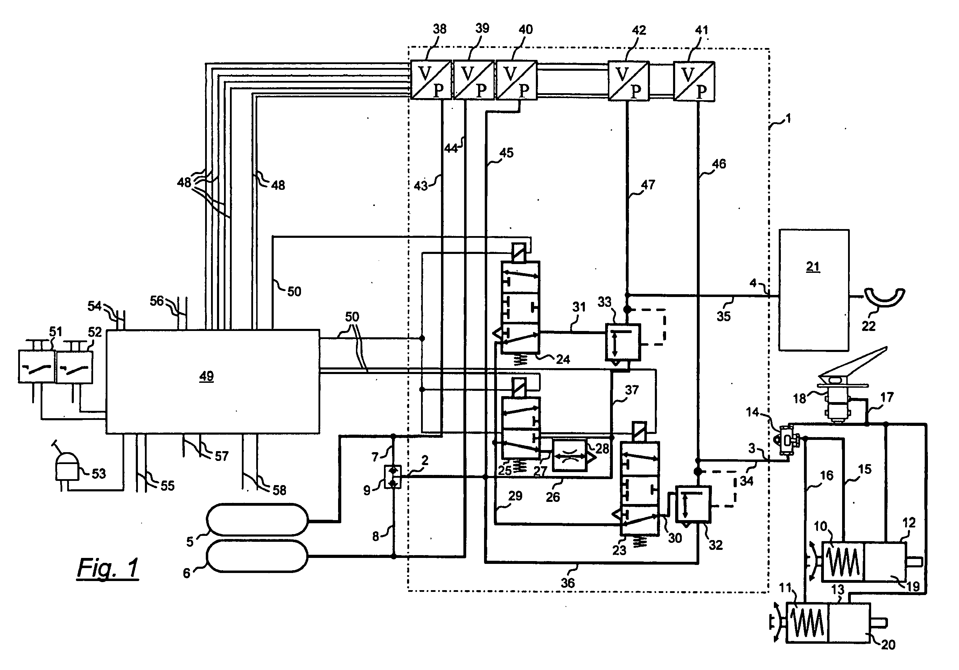

Fig. 1 zeigt schematisch einen Teil einer Bremsanlage für einen aus einem Zugfahrzeug und wenigstens einem Anhängefahrzeug bestehenden Fahrzeugzug. Die Abbildung zeigt hierbei insbesondere einen Feststellbremsmodulator 1 zusammen mit weiteren Komponenten der Bremsanlage, welche verwendet werden, um eine Feststellbremsfunktion für Bremsen des Zugfahrzeugs und für Bremsen des Anhängefahrzeugs bereitzustellen.

Der Feststellbremsmodulator 1 weist einen Drucklufteingang 2, einen ersten Druckluftausgang 3 und einen zweiten Druckluftausgang 4 auf. Über den Drucklufteingang 2 wird dem Feststellbremsmodulator 1 Druckluft aus einem ersten Druckluftvorratsbehälter 5 und/oder aus einem zweiten Druckluftvorratsbehälter 6 bereitgestellt. Der erste Druckluftvorratsbehälter 5 ist hierbei zunächst über eine Druckluftleitung 7 und der zweite Druckluftvorratsbehälter 6 über eine Druckluftleitung 8 mit einem Doppelrückschlagventil 9 verbunden. Über dieses Doppelrückschlagventil 9 wird der Feststellbremsmodulator 1 mit Druckluft aus einem der Druckluftvorratsbehälter 5 oder 6 belüftet. Das Doppelrückschlagventil 9 wählt hierbei die Druckluftleitung 7 oder 8, welche den höheren pneumatischen Druck aufweist, zur Verbindung mit dem Drucklufteingang 2 des Feststellbremsmodulators 1 aus. Am Drucklufteingang 2 liegt deshalb der höhere der pneumatischen Drücke der Druckluftleitungen 7 und 8 an. Ein Druckausgleich zwischen den Druckluftleitungen 7 und 8 über das Doppelrückschlagventil 9 wird vermieden. Hierdurch wird erreicht, dass bei einem Druckabfall in einem der Druckluftvorratsbehälter 5 oder 6 bspw. aufgrund eines technischen Defekts weder der andere Druckluftvorratsbehälter 6 bzw. 5 noch der Feststellbremsmodulator 1 über das Doppelrückschlagventil 9 entlüftet wird.

In einer von diesem Ausführungsbeispiel abweichenden Ausführungsform der Erfindung ist das Doppelrückschlagventil in den Feststellbremsmodulator integriert. Der Feststellbremsmodulator weist dann zwei Drucklufteingänge auf, durch welche die Druckluftleitungen zu den Druckluftvorratsbehältern zur Verbindung mit dem Doppelrückschlagventil 9 geführt sind.

Der Feststellbremsmodulator 1 steuert einen ersten pneumatischen Druck und einen zweiten pneumatischen Druck aus. Der erste pneumatische Druck wird am ersten Druckluftausgang 3 und der zweite pneumatische Druck wird am zweiten Druckluftausgang 4 bereitgestellt.

Über den ersten Druckluftausgang 3 sind Federspeicherteile 10 und 11 von Federspeicherbremszylindern 12 und 13 (oftmals genauer als "kombinierte Federspeicher-/Membranbremszylinder" bezeichnet) belüftbar und entlüftbar. Diese Federspeicherbremszylinder 12 und 13 stellen eine Feststellbremsfunktion für Bremsen des Zugfahrzeugs bereit. Diese Bremsen des Zugfahrzeugs sind bei belüfteten Federspeicherteilen 10 und 11 gelöst und bei entlüfteten Federspeicherteilen 10 und 11 eingelegt. In einem Fahrbetrieb des Zugfahrzeugs sind Bremsen dieses Zugfahrzeugs normalerweise nicht mittels einer Feststellbremsfunktion eingelegt. Deshalb sind im Fahrbetrieb des Fahrzeugs die Federspeicherteile 10 und 11 der Federspeicherbremszylinder 12 und 13 belüftet. Belüftet werden sie hierbei über den ersten Druckluftausgang 3, ein Wechselventil 14 und Druckluftleitungen 15 und 16. Das Wechselventil 14 ist hierbei über eine Druckluftleitung 17 mit einer Bremspedaleinrichtung 18 verbunden. Mittels dieser Bremspedaleinrichtung 18 wird regelmäßig eine Betätigung von Bremsen über eine Betriebsbremsfunktion, insbesondere bei einem fahrenden Fahrzeug, veranlasst. Für eine Betriebsbremsfunktion weisen die Federspeicherbremszylinder 12 und 13 Membranteile 19 und 20 auf. Bei belüfteten Membranteilen 19 und 20 spannen die Federspeicherbremszylinder 12 und 13 die Bremsen des Zugfahrzeugs zu.

Das Wechselventil 14 vermeidet eine Überbeanspruchung der Bremsen des Zugfahrzeugs aufgrund eines gleichzeitigen Einlegens dieser Bremsen mittels der Federspeicherteile 10 und 11 und der Membranteile 19 und 20 der Federspeicherbremszylinder 12 und 13. Über das Wechselventil 14 werden die Druckluftleitungen 15 und 16 nämlich immer mit dem höheren der pneumatischen Drücke, welche an dem ersten Druckluftausgang 3 und über die Druckluftleitung 17 bereitgestellt werden, beaufschlagt. Weil der pneumatische Druck in der Druckluftleitung 17, welcher ein ausgesteuerter Druck der Betriebsbremse ist, identisch ist mit dem pneumatischen Druck in den Membranteilen 19 und 20 der Federspeicherbremszylinder 12 und 13, ist der pneumatische Druck in den Federspeicherteilen 10 und 11 immer mindestens so hoch wie der pneumatische Druck in den Membranteilen 19 und 20 der Federspeicherbremszylinder 12 und 13. Bei eingelegter Feststellbremse, d.h. bei entlüfteten Federspeicherteilen 10 und 11 wird in Erwiderung auf eine Bereitstellung eines Steuerdrucks in der Druckluftleitung 17 folglich eine von den Federspeicherteilen 10 und 11 auf die Bremsen des Zugfahrzeugs ausgeübte Kraft in gleichem Maße reduziert, wie die von den Membranteilen 19 und 20 auf diese Bremsen ausgeübte Kraft erhöht wird.

In Abweichung von diesem Ausführungsbeispiel kann das Wechselventil auch in den Feststellbremsmodulator integriert sein. Der Feststellbremsmodulator weist dann einen Steuerdruckeingang auf, durch welchen die Druckluftleitung an das Wechselventil geführt wird.

In Abweichung von dem hier gezeigten Ausführungsbeispiel können über den zweiten Druckluftausgang 4 Federspeicherteile von Federspeicherbremszylindern weiterer Bremsen des Zugfahrzeugs belüftet und entlüftet werden. Das Zugfahrzeug kann dann ein Fahrzeug sein, an welches kein Anhänger angekoppelt ist und ggf. auch kein Anhänger ankoppelbar ist. Die weiteren Bremsen können hierbei Bremsen von Rädern einer weiteren Achse des Fahrzeugs sein. Dann kann eine Feststellbremsfunktion bspw. separat für Bremsen an Rädern einer Vorderachse und für Bremsen an Rädern einer Hinterachse bereitgestellt werden.

In dem hier gezeigten Ausführungsbeispiel ist jedoch über den zweiten Druckluftausgang 4 einem Anhängefahrzeug Druckluft zur Belüftung von Federspeicherbremszylindern von Bremsen dieses Anhängefahrzeugs bereitstellbar. Der zweite Druckluftausgang 4 ist deshalb zunächst mit einem Zugwagenschutzventil 21 verbunden. Aufgabe dieses Zugwagenschutzventils ist es, ein Entweichen von Druckluft zum Betätigen einer Betriebsbremsfunktion der Bremsen des Zugfahrzeugs über abgerissene Verbindungsleitungen zum Anhängefahrzeug zu vermeiden. Das Zugwagenschutzventil 21 kann nämlich eine nicht dargestellte Druckluftleitung mit einem ausgesteuerten pneumatischen Druck zum Betätigen einer Betriebsbremsfunktion von Bremsen des Anhängefahrzeugs unterbrechen. Bei einem Leitungsabriss dieser Leitung zum Anhängefahrzeug würde diese nicht dargestellte Druckluftleitung nämlich ohne das Zugwagenschutzventil 21 entlüftet werden. Über diese Druckluftleitung würden dann auch Druckluftleitungen, welche Bremsen des Zugfahrzeugs Druckluft für eine Betriebsbremsfunktion bereitstellen, entlüftet werden. Ohne das Zugwagenschutzventil 21 könnte bei abgerissenen Druckluftleitungen vom Zugfahrzeug zum Anhängefahrzeug folglich eine Betriebsbremsfunktion von Bremsen des Zugfahrzeugs nicht mehr oder nur noch eingeschränkt gewährleistet werden. Das Zugwagenschutzventil 21 zwischen dem zweiten Druckluftausgang 4 und einem Druckluftanschluss 22, über welchen eine Druckluftverbindung zum Anhängefahrzeug herstellbar ist, unterbricht bei einem Abfall des pneumatischen Drucks in der Druckluftleitung vom zweiten Druckluftausgang 4 zum Druckluftanschluss 22 die nicht dargestellte Druckluftleitung, welche dem Anhängefahrzeug einen ausgesteuerten Druck für eine Betriebsbremsfunktion bereitstellt.

Das Zugwagenschutzventil kann in Abweichung von diesem Ausführungsbeispiel auch in den Feststellbremsmodulator integriert sein. Dann weist der Feststellbremsmodulator einen Steuerdruckeingang und einen Steuerdruckausgang auf, wobei der Steuerdruckausgang über Druckluftleitungen und das Zugwagenschutzventil mit dem Steuerdruckeingang verbunden ist.

Im Feststellbremsmodulator 1 werden die Drücke an den Druckluftausgängen 3 und 4 mittels einer ersten Ventileinrichtung 23, einer zweiten Ventileinrichtung 24 und einer dritten Ventileinrichtung 25 ausgesteuert. Die erste Ventileinrichtung ist hierbei ein 3/3-Wege-Ventil 23. Die zweite Ventileinrichtung ist ein weiteres 3/3-Wege-Ventil 24. Die dritte Ventileinrichtung ist ein 3/2-Wege-Ventil 25.

Dieses 3/2-Wege-Ventil 25 ist über eine Druckluftleitung 26 mit dem Drucklufteingang 2 verbunden. Über eine Druckluftleitung 27 ist das 3/2-Wege-Ventil 25 ferner mit einer Einrichtung zur gedrosselten Entlüftung 28 verbunden. Das 3/2-Wege-Ventil 25 verbindet unbestromt eine Druckluftleitung 29 mit der Druckluftleitung 27. Bestromt verbindet das 3/2-Wege-Ventil 25 dagegen diese Druckluftleitung 29 mit der Druckluftleitung 26. Bei unbestromtem 3/2-Wege-Ventil 25 ist folglich die Druckluftleitung 29 über die Druckluftleitung 27 und die Einrichtung zur gedrosselten Entlüftung 28 gedrosselt entlüftbar. Bei bestromtem 3/2-Wege-Ventil 25 wird die Druckluftleitung 29 dagegen über die Druckluftleitung 26 mit der am Drucklufteingang 2 bereitgestellten Druckluft belüftet.

Die Druckluftleitung 29 verbindet das 3/2-Wege-Ventil 25 mit den 3/3-WegeVentilen 23 und 24. Das unbestromte 3/3-Wege-Ventil 23 verbindet die Druckluftleitung 29 mit einer ersten Druckluftleitung 30. Das unbelüftete 3/3-Wege-Ventil 24 verbindet die Druckluftleitung 29 mit einer zweiten Druckluftleitung 31. Bei belüfteter Druckluftleitung 29 stellen die unbestromten 3/3-Wege-Ventile 23 und 24 somit jeweils eine Funktion zum Belüften für die Druckluftleitung 30 bzw. 31 bereit. In einem ersten - mit einem ersten Strom - bestromten Zustand stellen die 3/3-Wege-Ventile 23 und 24 eine Funktion "Halten" bereit. Darüber hinaus stellen die 3/3-Wege-Ventile in einem zweiten - mit einem zweiten Strom - bestromten Zustand eine Funktion "schnelles Entlüften" bereit, wobei der zweiten Strom höher ist als der erste Strom. Bei mit dem ersten Strom bestromtem 3/3-Wege-Ventil 23 bzw. 24 wird somit ein pneumatischer Druck in der ersten Druckluftleitung 30 bzw. in der zweiten Druckluftleitung 31 in dem ersten bestromten Zustand des 3/3-Wege-Ventils 23 bzw. 24 gehalten. In dem zweiten bestromten Zustand dieses 3/3-Wege-Ventils 23 bzw. 24 wird die erste Druckluftleitung 30 bzw. die zweite Druckluftleitung 31 über das 3/3-Wege-Ventil 23 bzw. 24 schnell entlüftet.

Bei einer alternativen Ausführung sind der erste und der zweite bestromte Zustand vertauscht. D.h. im ersten bestromten Zustand des 3/3-Wege-Ventils 23 bzw. 24 wird unter Verwendung eines ersten Stromes die Funktion "schnelles Entlüften" bereitgestellt. Im zweiten bestromten Zustand des 3/3-Wege-Ventils 23 bzw. 24 wird unter Verwendung eines zweiten Stromes die Funktion "Halten" bereitgestellt, wobei der zweite Strom größer ist als der erste Strom. Bei dieser Ausführung ist ein schnelleres Schalten zwischen den Zuständen "Belüften" und "Entlüften" möglich, da nicht der Zustand "Halten" durchlaufen werden muss.

Mittels der Ventileinrichtungen bzw. Ventile 23, 24 und 25 wird somit in der ersten Druckluftleitung 30 und in der zweiten Druckluftleitung 31 jeweils ein pneumatischer Druck ausgesteuert. Der pneumatische Druck in der Druckluftleitung 30 wird in einem mit dieser Druckluft 30 verbundenen Relaisventil 32 luftmengenverstärkt. Ein weiteres Relaisventil 33 ist mit der Druckluftleitung 31 verbunden und stellt den pneumatischen Druck in dieser zweiten Druckluftleitung 31 mit einer größeren Luftmenge bereit. Über Druckluftleitungen 34 und 35 stellen die Relaisventile 32 und 33 im ersten Druckluftausgang 3 und dem zweiten Druckluftausgang 4 luftmengenverstärkt die pneumatischen Drücke der Druckluftleitungen 30 und 31 bereit. Diese größeren Luftmengen beziehen die Relaisventile 32 und 33 hierbei über Druckluftleitungen 36 und 37, welche die Relaisventile 32 und 33 über die Druckluftleitung 29 mit dem Druckluft bereitstellenden Drucklufteingang 2 verbinden. Zum Entlüften der Druckluftleitung 34 bzw. 35 in Erwiderung auf ein Entlüften der Druckluftleitung 30 bzw. 31 weist das Relaisventil 32 bzw. 33 zudem einen Ausgang zur Entlüftung auf.

In den Feststellbremsmodulator 1 sind in der Abbildung Drucksensoren 38, 39, 40, 41 und 42 integriert. Die Drucksensoren 38 und 39 sind über Druckluftleitungen 43 und 44 mit den Druckluftleitungen 7 und 8 verbunden und messen den jeweiligen pneumatischen Druck in diesen Druckluftleitungen 7 und 8, wobei der höhere dieser beiden Drücke gleich dem pneumatischen Druck am Drucklufteingang 2 und in der Druckluftleitung 26 ist. Dieser Druck kann zu Kontrollzwecken zusätzlich über eine Druckluftleitung 45 mittels des Drucksensors 40 gemessen werden. Bei einer alternativen Ausführung kann der Drucksensor 40 entfallen, da mittels der Drucksensoren 38 und 39 im Wesentlichen auch der vom Drucksensor 40 erfasste Druck ermittelt werden kann. Die Drucksensoren 41 und 42 messen über Druckluftleitungen 46 und 47 die pneumatischen Drücke in den Druckluftleitungen 34 und 35 bzw. an dem ersten Druckluftausgang 3 und dem zweiten Druckluftausgang 4.

Die Drucksensoren 38, 39, 40, 41 und 42 können in einen Deckel des Feststellbremsmodulators 1 integriert sein. Außerdem kann der Feststellbremsmodulator 1 alternativ auch eine geringere oder auch größere Anzahl von Drucksensoren aufweisen.

Die Drucksensoren 38, 39, 40, 41 und 42 sind elektrisch über elektrische Leitungen 48 mit einer im Feststellbremsmodulator 1 integrierten oder separat vom Feststellbremsmodulator 1 angeordneten Steuereinrichtung 49 verbunden. Diese Steuereinrichtung 49 versorgt die Drucksensoren 38, 39, 40, 41 und 42 über diese elektrischen Leitungen 48 mit elektrischer Energie und erhält Messergebnisse gemessener Drücke von den Drucksensoren 38, 39, 40, 41 und 42.

Die Steuereinrichtung 49 steuert die erste, die zweite und die dritte Ventileinrichtung 23, 24 und 25 des Feststellbremsmodulators 1. Hierzu ist die Steuereinrichtung 49 über elektrische Leitungen 50 mit den Ventileinrichtungen bzw. den 3/3-Wege-Ventilen 23 und 24 und der Ventileinrichtung bzw. dem 3/2-Wege-Ventil 25 verbunden. Diese elektrischen Leitungen 50 versorgen Spulen der Ventile 23, 24 und 25 mit elektrischer Energie und schalten hierdurch diese Ventile 23, 24 und 25.

Mittels Eingabeeinrichtungen 51 und 52 sind Signale zum Betätigen der Feststellbremsfunktion des Zugfahrzeugs bzw. des Anhängefahrzeugs an die Steuereinrichtung 49 sendbar. Die Feststellbremsfunktion des Anhängefahrzeugs ist ferner über eine Eingabeeinrichtung 53 steuerbar. Für die Energieversorgung der Bremsanlage und des Feststellbremsmodulators 1 weist die Steuereinrichtung elektrische Leitungen 54 und 55 zur Verbindung mit einer ersten und einer zweiten Stromversorgung auf. Die doppelte Stromversorgung stellt hierbei die Stromversorgung der Bremsanlage und des Feststellbremsmodulators 1 bei einem Ausfall einer der beiden Stromversorgungen sicher.

Weitere elektrische Leitungen 56, 57 und 58 sind Kommunikationsleitungen zum Austausch von Daten mit einer Einrichtung am Anhängefahrzeug, für eine CAN-Kommunikation und für eine SAE-Kommunikation.

Im Fahrbetrieb des Fahrzeugzugs, welcher die Bremsanlage dieses Ausführungsbeispiels aufweist, sind die Federspeicherteile 10 und 11 der Federspeicherbremszylinder 12 und 13 belüftet. Die Ventile 23 und 24 sind unbestromt, während allein das Ventil 25 bestromt ist. Bei einem Stromausfall während der Fahrt ist auch das Ventil 25 unbestromt. Die Federspeicherteile 10 und 11 werden über die Einrichtung zur gedrosselten Entlüftung 28 gedrosselt entlüftet. Hierdurch wird langsam die Feststellbremsfunktion aktiviert. Das Fahrzeug wird eingebremst und kommt zum Stehen.

Regulär wird das Fahrzeug bzw. der Fahrzeugzug mittels belüftbarer Membranteile von Bremszylindern eingebremst. Bei einer derartigen Bremsung werden unter anderem die Membranteile 19 und 20 der Federspeicherbremszylinder 12 und 13 belüftet. Das Fahrzeug wird abgebremst und kommt zum Stillstand. Mittels der Eingabeeinrichtung 51 veranlasst ein Fahrer des Fahrzeugs ein Feststellen des Zugfahrzeugs mittels der Feststellbremsfunktion. Dieses Signal geht an der Steuereinrichtung 49 ein, welche in Erwiderung auf dieses Signal das 3/3-Wege-Ventil 23 über die elektrischen Leitungen 50 in einer zweiten Stufe bestromt. Dieses 3/3-Wege-Ventil wechselt daraufhin in den zweiten bestromten Schaltzustand, welcher ein schnelles Entlüften der ersten Druckluftleitung 30 veranlasst. Über den Druckluftausgang des Relaisventils 32 wird infolge dessen auch die Druckluftleitung 34 derart entlüftet, dass der pneumatische Druck in der Druckluftleitung 34 ebenso abfällt wie der pneumatische Druck in der ersten Druckluftleitung 30. Der pneumatische Druck in den Druckluftleitungen 15 und 16 sinkt infolge dessen bis auf den pneumatischen Druck in der Druckluftleitung 17. Ein weiteres Absinken wird aufgrund des Wechselventils 14 verhindert. Durch das Absinken des Drucks in den Druckluftleitungen 15 und 16 erhöht sich der von den Federspeicherteilen 10 und 11 ausgeübte Druck auf die von den Federspeicherbremszylindern 12 und 13 betätigbaren Bremsen. Dieser Druck vermindert sich nicht, wenn mittels der Bremspedaleinrichtung 18 der pneumatische Druck in der Druckluftleitung 17 gesenkt wird. Der pneumatische Druck in den Federspeicherteilen 10 und 11 sinkt dann nämlich genauso wie der pneumatische Druck in den Membranteilen 19 und 20 bis sowohl die Federspeicherteile 10 und 11 als auch die Membranteile 12 und 13 entlüftet sind. Dann wird mittels der Federspeicherbremszylinder 12 und 13 lediglich die Feststellbremsfunktion bereitgestellt. Bei entlüfteter Druckluftleitung 34 kann, um elektrische Energie zu sparen, das 313-Wege-Ventil 23 wieder in den unbestromten Zustand wechseln. Über den Druckluftsensor 41 kann hierbei festgestellt werden, dass die Druckluftleitung 34 entlüftet ist.

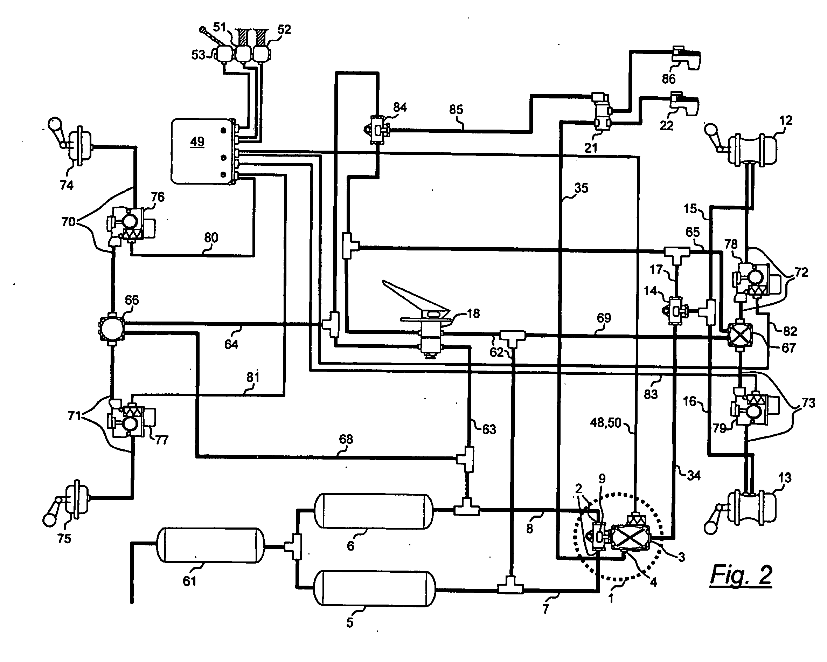

Fig. 2 zeigt einen Ausschnitt der erfindungsgemäßen Bremsanlage in vereinfachter schematischer Darstellung, wobei der Feststellbremsmodulator 1 als Blackbox dargestellt ist. Insbesondere zeigt Fig. 2 nicht nur die Bremsanlage zur Bereitstellung der Feststellbremsfunktion, sondern auch Teile der Bremsanlage, welche eine Betriebsbremsfunktion bereitstellen.

Das Ausführungsbeispiel gemäß Fig. 2 gleicht weitestgehend dem Ausführungsbeispiel gemäß Fig. 1. Insbesondere bezeichnen gleiche Bezugsziffern gleiche Teile. Im Folgenden werden deshalb lediglich Ergänzungen und Abweichungen zum Ausführungsbeispiel gemäß Fig. 1 erläutert.

In den Feststellbremsmodulator 1 ist das Doppelrückschlagventil 9 integriert. Der Feststellbremsmodulator 1 verfügt deshalb über zwei Drucklufteingänge 2, über welche der Feststellbremsmodulator 1 von den Druckluftvorratsbehältern 5 und 6 mit Druckluft versorgt wird. Die Druckluftvorratsbehälter 5 und 6 erhalten Druckluft hierbei von einer Druckluftversorgung 61, insbesondere von einem Kompressor. Zwischen den Druckluftvorratsbehältern 5 und 6 und der Druckluftversorgung 61 ist ferner jeweils ein (nicht dargestelltes) Rückschlagventil zur Absicherung der den Druckluftvorratsbehälter 5 und 6 zugeordneten Bremskreisen vorgesehen.

Zur Breitstellung einer Betriebsbremsfunktion wird die Bremspedaleinrichtung 18 über Druckluftleitungen 62 und 63 und die Druckluftleitungen 7 und 8 mit Druckluft aus dem ersten Druckluftvorratsbehälter 5 und dem zweiten Druckluftvorratsbehälter 6 versorgt. Mittels der Bremspedaleinrichtung 18 wird ein pneumatischer Druck in den Druckluftleitungen 64 und 65 ausgesteuert. Dieser ausgesteuerte Druck wird in dem Relaisventil 66 bzw. 67 luftmengenverstärkt. Die Druckluft für diese Verstärkung erhält das Relaisventil 66 bzw. 67 mittels einer Druckluftleitung 68 bzw. 69 und die Druckluftleitung 63 bzw. 62 von dem ersten Druckluftvorratsbehälter 5 bzw. dem zweiten Druckluftvorratsbehälter 6. Das Relaisventil 66 bzw. 67 belüftet oder entlüftet über Druckluftleitungen 70 und 71 bzw. 72 und 73 Bremszylinder 74 und 75 bzw. die Federspeicherbremszylinder 12 und 13. Die Bremszylinder 74 und 75 betätigen hierbei vorzugsweise Bremsen einer Vorderachse eines Fahrzeugs. Die Federspeicherbremszylinder 12 und 13 sind hingegen vorzugsweise an einer Hinterachse zum Abbremsen von Rädern an dieser Hinterachse dieses Fahrzeugs verbaut.

In den Druckluftleitungen 70, 71, 72 und 73 befinden sich Antiblockiersystem (ABS)-Ventile 76, 77, 78 und 79, welche über elektrische Leitungen 80, 81, 82 und 83 mit der Steuereinrichtung 49 verbunden sind und von dieser Steuereinrichtung 49 steuerbar sind. Ein Blockieren eines Rades des Fahrzeugs kann bspw. Mittels nicht dargestellter Drehsensoren festgestellt werden. Ein Membranteil des Bremszylinders 74 bzw. 75 bzw. der Membranteil 19 bzw. 20 des Federspeicherbremszylinders 12 bzw. 13 wird über das ABS-Ventil 76, 77, 78 bzw. 79 entlüftet, um die mittels des Bremszylinders 74 bzw. 75 bzw. des Federspeicherbremszylinders 12 bzw. 13 betätigte Bremse an einem blockierenden Rad zu lösen.

Über ein Wechselventil 84 wird der höhere der von der Bremspedaleinrichtung 18 ausgesteuerten und in den Druckluftleitungen 64 bzw. 65 vorliegenden pneumatischen Drücke über eine Druckluftleitung 85 dem Zugwagenschutzventil 21 bereitgestellt. Das Zugwagenschutzventil 21 stellt diesen ausgesteuerten Druck wiederum über einen Druckluftanschluss 86 einer Verbindung zu einem Anhängefahrzeug bereit. Mittels des am Druckluftanschluss 86 anliegenden pneumatischen Drucks, welcher ein Steuerdruck ist, kann die Betriebsbremsfunktion von Bremsen des Anhängefahrzeugs ausgeführt werden. Mittels des am Druckluftanschluss 86 anliegenden pneumatischen Drucks sind nämlich zum Betätigen der Betriebsbremsfunktion Membranteile von Bremszylindern belüftbar und entlüftbar, während über den Druckluftanschluss 22 Federspeicherteile von Bremszylindern belüftbar und entlüftbar sind und der Druckluftvorrat des Anhängefahrzeugs aufgefüllt wird.

Die Abbildung gemäß Fig. 2 zeigt insgesamt, wie der erfindungsgemäße Feststellbremsmodulator vorteilhaft in eine Bremsanlage integriert werden kann, welche eine Betriebsbremsfunktion und eine Feststellbremsfunktion für ein Fahrzeug, insbesondere einen Fahrzeugzug, bereitstellt.

Insgesamt stellt die Erfindung einen Feststellbremsmodulator 1 bereit, welcher in einer Bremsanlage mit einer Feststellbremsfunktion für das Zugfahrzeug und das Anhängefahrzeug einsetzbar ist, welcher pneumatische Drücke für die Federspeicher im Zugfahrzeug und für das Anhängefahrzeug separat modulieren kann und welcher bei einem Stromausfall diese Drücke absenkt, um damit eine Feststellbremsfunktion zu aktivieren. Im Gegensatz zu herkömmlichen Feststellbremsmodulatoren braucht die Erfindung lediglich eine Ventileinrichtung zu bestromen, um beide Federspeicherbremskreise zu belüften. Weil im Fahrbetrieb eines Fahrzeugs diese beiden Drücke auf einem hohen Niveau liegen müssen, braucht die Erfindung im Fahrbetrieb lediglich ein Ventil zu bestromen und spart deshalb während des Fahrbetriebs elektrische Energie.

## Patentansprüche

1. Feststellbremsmodulator zur Steuerung einer Feststellbremsfunktion von Bremsen eines Fahrzeugs, insbesondere eines aus einem Zugfahrzeug und einem Anhängefahrzeug bestehenden Fahrzeugzugs, mit wenigstens einem Drucklufteingang (2), wenigstens einem ersten und einem zweiten Druckluftausgang (3, 4) und wenigstens einer ersten und einer zweiten elektromagnetisch betätigbaren Ventileinrichtung (23, 24), wobei über die erste Ventileinrichtung (23) eine erste Druckluftleitung (30, 34) zum ersten Druckluftausgang (3) mit am Drucklufteingang (2) bereitgestellter Druckluft unter Aussteuerung eines ersten pneumatischen Drucks belüftbar ist, wobei über die zweite Ventileinrichtung (24) eine zweite Druckluftleitung (31, 35) zum zweiten Druckluftausgang (4) mit am Drucklufteingang (2) bereitgestellter Druckluft unter Aussteuerung eines zweiten pneumatischen Drucks belüftbar ist und wobei bei unbestromter erster Ventileinrichtung (23) die erste Druckluftleitung (30, 34) über die erste Ventileinrichtung (23) entlüftbar ist und bei unbestromter zweiter Ventileinrichtung (24) die zweite Druckluftleitung (31, 35) über die zweite Ventileinrichtung (24) entlüftbar ist, **gekennzeichnet durch** eine dritte Ventileinrichtung (25), über welche die erste und die zweite Ventileinrichtung (23, 24) mit dem Drucklufteingang (2) verbindbar sind, wobei bei unbestromter erster Ventileinrichtung (23), unbestromter zweiter Ventileinrichtung (24) und bestromter dritter Ventileinrichtung (25) die erste Druckluftleitung (30, 34) über die erste Ventileinrichtung (23) belüftbar ist und die zweite Druckluftleitung (31, 35) über die zweite Ventileinrichtung (24) belüftbar ist.

2. Feststellbremsmodulator nach Anspruch 1, **dadurch gekennzeichnet, dass** die dritte Ventileinrichtung (25) ein 3/2-Wege-Magnetventil ist.

3. Feststellbremsmodulator nach einem der vorhergehenden Ansprüche, **gekennzeichnet durch** eine Einrichtung zur gedrosselten Entlüftung (28), **durch** welche die erste Druckluftleitung (30) bei unbestromter erster Ventileinrichtung (23) und unbestromter dritter Ventileinrichtung (25) und die zweite Druckluftleitung (31) bei unbestromter zweiter Ventileinrichtung (24) und unbestromter dritter Ventileinrichtung (25) gedrosselt entlüftbar ist.

4. Feststellbremsmodulator nach einem der vorhergehenden Ansprüche, **dadurch gekennzeichnet, dass** die erste Ventileinrichtung (23) und/oder die zweite Ventileinrichtung (24) je ein 3/3-Wege-Magnetventil sind, wobei über ein derartiges, unbestromtes 3/3-Wege-Magnetventil (23; 24) die erste bzw. zweite Druckluftleitung (30, 34; 31, 35) zum Entlüften oder Belüften dieser Druckluftleitung (30, 34; 31, 35) mit der dritten Ventileinrichtung (25) verbindbar ist, wobei über dieses mit einem ersten Strom bestromte Ventil (23; 24) ein pneumatischer Druck in dieser Druckluftleitung (30, 34; 31, 35) haltbar ist, wobei über dieses mit einem zweiten Strom bestromte Ventil (23; 24) diese Druckluftleitung (30, 34; 31, 35) entlüftbar ist und wobei der erste Strom kleiner als der zweite Strom ist.

5. Feststellbremsmodulator nach einem der Ansprüche 1 bis 3, **dadurch gekennzeichnet, dass** die erste Ventileinrichtung (23) und/oder die zweite Ventileinrichtung (24) je ein 3/3-Wege-Magnetventil sind, wobei über ein derartiges, unbestromtes 3/3-Wege-Magnetventil (23; 24) die erste bzw. zweite Druckluftleitung (30, 34; 31, 35) zum Entlüften oder Belüften dieser Druckluftleitung (30, 34; 31, 35) mit der dritten Ventileinrichtung (25) verbindbar ist, wobei über dieses mit einem ersten Strom bestromte Ventil (23; 24) diese Druckluftleitung (30, 34; 31, 35) entlüftbar ist, wobei über dieses mit einem zweiten Strom bestromte Ventil (23; 24) ein pneumatischer Druck in dieser Druckluftleitung (30, 34; 31, 35) haltbar ist und wobei der erste Strom kleiner als der zweite Strom ist.

6. Feststellbremsmodulator nach Anspruch 4 oder 5, **dadurch gekennzeichnet, dass** das 3/3-Wege-Magnetventil (23; 24) als Doppelankermagnetventil ausgebildet ist.

7. Feststellbremsmodulator nach einem der vorhergehenden Ansprüche, **gekennzeichnet durch** ein in der ersten Druckluftleitung (30, 34) bzw. zweiten Druckluftleitung (31, 35) angeordnetes Relaisventil (32; 33), wobei ein pneumatischer Druck in der ersten Druckluftleitung (3) bzw. zweiten Druckluftleitung (4) mittels dieses Relaisventils (32; 33) luftmengenverstärkt am ersten Druckluftausgang (3) bzw. zweiten Druckluftausgang (4) bereitstellbar ist.

8. Feststellbremsmodulator nach einem der vorhergehenden Ansprüche, **gekennzeichnet durch** ein oder mehrere, insbesondere zwei, insbesondere in einen Deckel des Feststellbremsmodulators integrierte, Drucksensoren (38, 39, 40, 41, 42), wobei mittels jedes Drucksensors (38, 39, 40, 41, 42) ein pneumatischer Druck, insbesondere der pneumatische Druck an dem wenigstens einen Drucklufteingang (2) und/oder dem ersten Druckluftausgang (3) und/oder dem zweiten Druckluftausgang (4), messbar ist.

9. Feststellbremsmodulator nach einem der vorhergehenden Ansprüche, **gekennzeichnet durch** ein integriertes oder separat angeordnetes Doppelrückschlagventil (9), über welches die dritte Ventileinrichtung (25) mit Druckluft von einem von zwei Drucklufteingängen, und zwar von demjenigen, an welchem der höhere Druck anliegt, belüftbar ist, wobei die dritte Ventileinrichtung (25) nicht über dieses Doppelrückschlagventil (9) entlüftbar ist.

10. Festsstellbremsmodulator nach einem der vorhergehenden Ansprüche, **gekennzeichnet durch** ein mit der den ersten pneumatischen Druck führenden ersten Druckluftleitung (30, 34) verbundenes, integriertes oder separat angeordnetes Wechselventil (14), dem ein ausgesteuerter Druck einer Bremspedaleinrichtung (18) bereitstellbar ist und wobei über das Wechselventil (14) der höhere dieser beiden Drücke, nämlich des ausgesteuerten Drucks und des ersten pneumatischen Drucks, wenigstens einem Federspeicherbremszylinder (12, 13) bereitstellbar ist.

11. Feststellbremsmodulator nach einem der vorhergehenden Ansprüche, **gekennzeichnet durch** ein integriertes oder separat angeordnetes Zugwagenschutzventil (21), das mit der zweiten Druckluftleitung (31, 35) bzw. dem zweiten Druckluftausgang (4) verbunden ist, welches zudem mit dem ausgesteuerten Druck der Bremspedaleinrichtung (18) verbindbar ist und einen Steuerdruckausgang aufweist, wobei an dem Steuerdruckausgang ein ausgesteuerter pneumatischer Druck zum Betätigen einer Betriebsbremsfunktion eines Anhängefahrzeugs bereitstellbar ist und wobei bei einem Abfall des pneumatischen Drucks in der zweiten Druckluftleitung (31, 35) bzw. am zweiten Druckluftausgang (4) unter einen vorbestimmten Schwellenwert der ausgesteuerte Druck der Bremspedaleinrichtung (18) automatisch absperrbar ist.

12. Feststellbremsmodulator nach einem der vorhergehenden Ansprüche, **gekennzeichnet durch** eine integrierte oder separat angeordnete Steuereinrichtung (49) zur Steuerung des Feststellbremsmodulator (1).

13. Verwendung eines Bremsmodulators zur Steuerung von Bremsen eines Fahrzeugs, insbesondere eines aus einem Zugfahrzeug und einem Anhängefahrzeug bestehenden Fahrzeugzugs, wobei der Bremsmodulator aufweist:
- wenigstens einen Drucklufteingang (2), wenigstens einen ersten Druckluftausgang (3) und einen zweiten Druckluftausgang (4),
- wenigstens eine erste elektromagnetisch betätigbare Ventileinrichtung (23), eine zweite elektromagnetisch betätigbare Ventileinrichtung (24) und eine dritte elektromagnetisch betätigbare Ventileinrichtung (25),
- wobei über die erste Ventileinrichtung (23) eine erste Druckluftleitung (30, 34) zum ersten Druckluftausgang (3) mit am Drucklufteingang (2) bereitgestellter Druckluft belüftbar ist,
- wobei über die zweite Ventileinrichtung (24) eine zweite Druckluftleitung (31, 35) zum zweiten Druckluftausgang (4) mit am Drucklufteingang (2) bereitgestellter Druckluft belüftbar ist,
- wobei bei unbestromter erster Ventileinrichtung (23) und bestromter dritter Ventileinrichtung (25) die erste Druckluftleitung (30, 34) über die erste Ventileinrichtung (23) belüftbar ist und bei unbestromter zweiter Ventileinrichtung (24) und bestromter dritter Ventileinrichtung (25) die zweite Druckluftleitung (31, 35) über die zweite Ventileinrichtung (24) belüftbar ist und
- wobei bei unbestromter erster Ventileinrichtung (23) und unbestromter dritter Ventileinrichtung (25) die erste Druckluftleitung (30, 34) über die dritte Ventileinrichtung (25) mit einer weiteren Druckluftleitung (27) verbindbar ist und bei unbestromter zweiter Ventileinrichtung (24) und unbestromter dritter Ventileinrichtung (25) die erste Druckluftleitung (30, 34) mit dieser weiteren Druckluftleitung (27) verbindbar ist,
als Feststellbremsmodulator nach einem der Ansprüche 1 bis 12 zur Steuerung einer Feststellbremsfunktion.

14. Verwendung nach Anspruch 13, wobei die weitere Druckluftleitung (27) als Entlüftungsleitung zur Entlüftung der ersten Druckluftleitung (30) und der zweiten Druckluftleitung (31) über die dritte Ventileinrichtung (25) verwendet wird.

## Claims

1. Parking brake modulator for controlling a parking brake function of brakes of a vehicle, in particular of a vehicle combination composed of a tractor vehicle and a trailer vehicle, having at least one compressed air inlet (2), at least one first and one second compressed air outlet (3, 4) and at least one first and one second electromagnetically actuable valve device (23, 24), with it being possible by means of the first valve device (23) for a first compressed air line (30, 34) to the first compressed air outlet (3) to be aerated with compressed air provided at the compressed air inlet (2) so as to output a first pneumatic pressure, with it being possible by means of the second valve device (24) for a second compressed air line (31, 35) to the second compressed air outlet (4) to be aerated with compressed air provided at the compressed air inlet (2) while controlling a second pneumatic pressure, and with it being possible for the first compressed air line (30, 34) to be deaerated via the first valve device (23) when the first valve device (23) is electrically de-energized and with it being possible for the second compressed air line (31, 35) to be deaerated via the second valve device (24) when the second valve device (24) is electrically de-energized, **characterized by** a third valve device (25) by means of which the first and second valve devices (23, 24) can be connected to the compressed air inlet (2), with it being possible for the first compressed air line (30, 34) to be aerated via the first valve device (23) and for the second compressed air line (31, 35) to be aerated via the second valve device (24) when the first valve device (23) is electrically de-energized, the second valve device (24) is electrically de-energized and the third valve device (25) is electrically energized.

2. Parking brake modulator according to Claim 1, **characterized in that** the third valve device (25) is a 3/2-way solenoid valve.

3. Parking brake modulator according to one of the preceding claims, **characterized by** a device for throttled deaeration (28), by means of which device the first compressed air line (30) can be deaerated in a controlled fashion when the first valve device (23) is electrically de-energized and the third valve device (25) is electrically de-energized, and the second compressed air line (31) can be deaerated in a controlled fashion when the second valve device (24) is electrically de-energized and the third valve device (25) is electrically de-energized.

4. Parking brake modulator according to one of the preceding claims, **characterized in that** the first valve device (23) and/or the second valve device (24) are in each case a 3/3-way solenoid valve, with it being possible by means of a 3/3-way solenoid valve (23; 24) of said type, when electrically de-energized, for the first or second compressed air line (30, 34; 31, 35) to be connected to the third valve device (25) for the aeration or deaeration of said compressed air line (30, 34; 31, 35), with it being possible by means of said valve (23, 24), when energized with a first electrical current, for a pneumatic pressure in said compressed air line (30, 34; 31, 35) to be maintained, and with it being possible by means of said valve (23; 24), when energized with a second electrical current, for said compressed air line (30, 34; 31, 35) to be deaerated, and with the first electrical current being lower than the second electrical current.

5. Parking brake modulator according to one of Claims 1 to 3, **characterized in that** the first valve device (23) and/or the second valve device (24) are in each case a 3/3-way solenoid valve, with it being possible by means of a 3/3-way solenoid valve (23; 24) of said type, when not electrically de-energized, for the first or second compressed air line (30, 34; 31, 35) to be connected to the third valve device (25) for the aeration or deaeration of said compressed air line (30, 34; 31, 35), with it being possible by means of said valve (23, 24), when energized with a first electrical current, for said compressed air line (30, 34; 31, 35) to be deaerated, with it being possible by means of said valve (23; 24), when energized with a second electrical current, for a pneumatic pressure in said compressed air line (30, 34; 31, 35) to be held, and with the first electrical current being lower than the second electrical current.

6. Parking brake modulator according to Claim 4 or 5, **characterized in that** the 3/3-way solenoid valve (23; 24) is designed as a double-armature solenoid valve.

7. Parking brake modulator according to one of the preceding claims, **characterized by** a relay valve (32; 33) which is arranged in the first compressed air line (30, 34) and second compressed air line (31, 35) respectively, with it being possible by means of said relay valve (32; 33) for a pneumatic pressure in the first compressed air line (3) and second compressed air line (4) respectively to be provided with boosted air quantity at the first compressed air outlet (3) and second compressed air outlet (4) respectively.

8. Parking brake modulator according to one of the preceding claims, **characterized by** one or more, in particular two pressure sensors (38, 39, 40, 41, 42) which are in particular integrated in a lid of the parking brake modulator, with it being possible by means of each pressure sensor (38, 39, 40, 41, 42) for a pneumatic pressure, in particular the pneumatic pressure at the at least one compressed air inlet (2) and/or at the first compressed air outlet (3) and/or at the second compressed air outlet (4), to be measured.

9. Parking brake modulator according to one of the preceding claims, **characterized by** an integrated or separately arranged double check valve (9) by means of which the third valve device (25) can be aerated with compressed air from one of two compressed air inlets, specifically from that air inlet at which the higher pressure prevails, with it not being possible for the third valve device (25) to be deaerated via said double check valve (9).

10. Parking brake modulator according to one of the preceding claims, **characterized by** an integrated or separately arranged shuttle valve (14) which is connected to the first compressed air line (30, 34) which conducts the first pneumatic pressure, to which shuttle valve (14) can be provided an output pressure from a brake pedal device (18), and with it being possible for the higher of said two pressures, specifically of the output pressure and first pneumatic pressure, to be provided to at least one spring brake cylinder (12, 13).

11. Parking brake modulator according to one of the preceding claims, **characterized by** an integrated or separately arranged tractor vehicle protection valve (21) which is connected to the second compressed air line (31, 34) or second compressed air outlet (4) and which can also be connected to the output pressure from the brake pedal device (18) and has a control pressure output, with it being possible for an output pneumatic pressure for actuating a service brake function of a trailer vehicle to be provided at the control pressure output, and with it being possible for the output pressure of the brake pedal device (18) to be automatically shut off in the event of a drop in the pneumatic pressure in the second compressed air line (31, 35) or at the second compressed air outlet (4) below a predetermined threshold value.

12. Parking brake modulator according to one of the preceding claims, **characterized by** an integrated or separately arranged control device (49) for controlling the parking brake modulator (1).

13. Use of a brake modulator for controlling brakes of a vehicle, in particular of a vehicle combination composed of a tractor vehicle and a trailer vehicle, with the brake modulator having:
- at least one compressed air inlet (2), at least one first compressed air outlet (3) and one second compressed air outlet (4),
- at least one first electromagnetically actuable valve device (23), one second electromagnetically actuable valve device (24) and one third electromagnetically actuable valve device (25),
- with it being possible by means of the first valve device (23) for a first compressed air line (30, 34) to the first compressed air outlet (3) to be aerated with compressed air provided at the compressed air inlet (2),
- with it being possible by means of the second valve device (24) for a second compressed air line (31, 35) to the second compressed air outlet (4) to be aerated with compressed air provided at the compressed air inlet (2),
- with it being possible for the first compressed air line (30, 34) to be aerated via the first valve device (23) when the first valve device (23) is electrically de-energized and the third valve device (25) is electrically energized, and for the second compressed air line (31, 35) to be aerated via the second valve device (24) when the second valve device (24) is electrically de-energized and the third valve device (25) is electrically energized, and
- with it being possible for the first compressed air line (30, 34) to be connected via the third valve device (25) to a further compressed air line (27) when the first valve device (23) is electrically de-energized and the third valve device (25) is electrically de-energized, and for the first compressed air line (30, 34) to be connected to said further compressed air line (27) when the second valve device (24) is electrically de-energized and the third valve device (25) is electrically de-energized,
as a parking brake modulator according to one of Claims 1 to 12 for controlling a parking brake function.

14. Use according to Claim 13, with the further compressed air line (27) being used as a deaeration line for deaerating the first compressed air line (30) and the second compressed air line (31) via the third valve device (25).

## Revendications

1. Modulateur de frein de stationnement pour la commande d'une fonction de frein de stationnement des freins d'un véhicule, en particulier d'un train de véhicules constitué d'un véhicule tracteur et d'un véhicule remorque, comprenant au moins une entrée d'air comprimé (2), au moins une première et une deuxième sortie d'air comprimé (3, 4), et au moins un premier et un deuxième dispositif de soupape (23, 24) à commande électromagnétique, une première conduite d'air comprimé (30, 34) allant à la première sortie d'air comprimé (3) pouvant être alimentée en air par le biais du premier dispositif de soupape (23) avec de l'air comprimé fourni à l'entrée d'air comprimé (2) par commande d'une première pression pneumatique, une deuxième conduite d'air comprimé (31, 35) allant à la deuxième sortie d'air comprimé (4) pouvant être alimentée en air par le biais du deuxième dispositif de soupape (24) avec de l'air comprimé fourni à l'entrée d'air comprimé (2) par commande d'une deuxième pression pneumatique, et lorsque le premier dispositif de soupape (23) n'est pas alimenté en courant, la première conduite d'air comprimé (30, 34) pouvant être évacuée par le biais du premier dispositif de soupape (23) et lorsque le deuxième dispositif de soupape (24) n'est pas alimenté en courant, la deuxième conduite d'air comprimé (31, 35) pouvant être évacuée par le biais du deuxième dispositif de soupape (24), **caractérisé par** un troisième dispositif de soupape (25), par le biais duquel le premier et le deuxième dispositif de soupape (23, 24) peuvent être connectés à l'entrée d'air comprimé (2), et lorsque le premier dispositif de soupape (23) n'est pas alimenté en courant, que le deuxième dispositif de soupape (24) n'est pas alimenté en courant et que le troisième dispositif de soupape (25) est alimenté en courant, la première conduite d'air comprimé (30, 34) peut être alimentée en air par le biais du premier dispositif de soupape (23) et la deuxième conduite d'air comprimé (31, 35) peut être alimentée en air par le biais du deuxième dispositif de soupape (24).

2. Modulateur de frein de stationnement selon la revendication 1, **caractérisé en ce que** le troisième dispositif de soupape (25) est une électrovanne à 3/2 voies.

3. Modulateur de frein de stationnement selon l'une quelconque des revendications précédentes, **caractérisé par** un dispositif pour l'évacuation étranglée (28), par le biais duquel la première conduite d'air comprimé (30) peut être évacuée de manière étranglée lorsque le premier dispositif de soupape (23) n'est pas alimenté en courant et que le troisième dispositif de soupape (25) n'est pas alimenté en courant, et la deuxième conduite d'air comprimé (31) peut être évacuée de manière étranglée lorsque le deuxième dispositif de soupape (24) n'est pas alimenté en courant et que le troisième dispositif de soupape (25) n'est pas alimenté en courant.

4. Modulateur de frein de stationnement selon l'une quelconque des revendications précédentes, **caractérisé en ce que** le premier dispositif de soupape (23) et/ou le deuxième dispositif de soupape (24) sont chacun une électrovanne à 3/3 voies/, la première, respectivement la deuxième conduite d'air comprimé (30, 34 ; 31, 35) pouvant être connectée au troisième dispositif de soupape (25) par le biais d'une telle électrovanne à 3/3 voies non alimentée en courant (23 ; 24) pour l'évacuation ou l'alimentation en air de cette conduite d'air comprimé (30, 34 ; 31, 35), une pression pneumatique pouvant être maintenue dans cette conduite d'air comprimé (30, 34 ; 31, 35) par le biais de cette soupape (23 ; 24) alimentée avec un premier courant, cette conduite d'air comprimé (30, 34 ; 31, 35) pouvant être évacuée par le biais de cette soupape (23 ; 24) alimentée avec un deuxième courant, et le premier courant étant plus faible que le deuxième courant.

5. Modulateur de frein de stationnement selon l'une quelconque des revendications 1 à 3, **caractérisé en ce que** le premier dispositif de soupape (23) et/ou le deuxième dispositif de soupape (24) sont chacun une électrovanne à 3/3 voies/, la première, respectivement la deuxième conduite d'air comprimé (30, 34 ; 31, 35) pouvant être connectée au troisième dispositif de soupape (25) par le biais d'une telle électrovanne à 3/3 voies non alimentée en courant (23 ; 24) pour l'évacuation ou l'alimentation en air de cette conduite d'air comprimé (30, 34 ; 31, 35), cette conduite d'air comprimé (30, 34 ; 31, 35) pouvant être évacuée par le biais de cette soupape (23 ; 24) alimentée avec un premier courant, une pression pneumatique pouvant être maintenue dans cette conduite d'air comprimé (30, 34 ; 31, 35) par le biais de cette soupape (23 ; 24) alimentée avec un deuxième courant, et le premier courant étant plus faible que le deuxième courant.

6. Modulateur de frein de stationnement selon la revendication 4 ou 5, **caractérisé en ce que** l'électrovanne à 3/3 voies (23 ; 24) est réalisée sous forme d'électrovanne à double induit.

7. Modulateur de frein de stationnement selon l'une quelconque des revendications précédentes, **caractérisé par** une soupape relais (32 ; 33) disposée dans la première conduite d'air comprimé (30, 34), respectivement la deuxième conduite d'air comprimé (31, 35), une pression pneumatique dans la première conduite d'air comprimé (3) respectivement la deuxième conduite d'air comprimé (4) pouvant être fournie au moyen de cette soupape relais (32 ; 33) avec amplification de la quantité d'air à la première sortie d'air comprimé (3) respectivement à la deuxième sortie d'air comprimé (4).

8. Modulateur de frein de stationnement selon l'une quelconque des revendications précédentes, **caractérisé par** un ou plusieurs capteurs de pression (38, 39, 40, 41, 42), en particulier deux, en particulier intégrés dans un couvercle du modulateur de frein de stationnement, une pression pneumatique, notamment la pression pneumatique au niveau de l'au moins une entrée d'air comprimé (2) et/ou au niveau de la première sortie d'air comprimé (3) et/ou au niveau de la deuxième sortie d'air comprimé (4) pouvant être mesurée au moyen de chaque capteur de pression (38, 39, 40, 41, 42).

9. Modulateur de frein de stationnement selon l'une quelconque des revendications précédentes, **caractérisé par** un clapet anti-retour double (9) intégré ou disposé séparément, par le biais duquel le troisième dispositif de soupape (25) peut être alimenté en air avec de l'air comprimé par l'une de deux entrées d'air comprimé, et précisément par celle à laquelle s'applique la plus haute pression, le troisième dispositif de soupape (25) ne pouvant pas être évacué par le biais de ce clapet anti-retour double (9).

10. Modulateur de frein de stationnement selon l'une quelconque des revendications précédentes, **caractérisé par** une soupape d'échange (14) intégrée ou disposée séparément, connectée à la première conduite d'air comprimé (30, 34) conduisant la première pression pneumatique, à laquelle peut être fournie une pression réglée par un dispositif de pédale de frein (18) et par le biais de la soupape d'échange (14), la plus élevée de ces deux pressions, à savoir la pression réglée et la première pression pneumatique, pouvant être fournie à au moins un cylindre de frein à accumulateur à ressort (12, 13).

11. Modulateur de frein de stationnement selon l'une quelconque des revendications précédentes, **caractérisé par** une soupape de protection du véhicule tracteur (21) intégrée ou disposée séparément, qui est connectée à la deuxième conduite d'air comprimé (31, 35), respectivement à la deuxième sortie d'air comprimé (4), qui peut en outre être connectée à la pression réglée du dispositif de pédale de frein (18) et qui présente une sortie de pression de commande, une pression pneumatique réglée pour l'actionnement d'une fonction de frein de service d'un véhicule remorque pouvant être fournie au niveau de la sortie de pression de commande, et en cas de chute de la pression pneumatique dans la deuxième conduite d'air comprimé (31, 35) ou au niveau de la deuxième sortie d'air comprimé (4) en dessous d'une valeur seuil prédéterminée, la pression réglée du dispositif de pédale de frein (18) pouvant être automatiquement coupée.

12. Modulateur de frein de stationnement selon l'une quelconque des revendications précédentes, **caractérisé par** un dispositif de commande (49) intégré ou disposé séparément pour la commande du modulateur de frein de stationnement (1).

13. Utilisation d'un modulateur de frein pour commander des freins d'un véhicule, en particulier d'un train de véhicules constitué d'un véhicule tracteur et d'un véhicule remorque, le modulateur de frein présentant :
- au moins une entrée d'air comprimé (2), au moins une première sortie d'air comprimé (3) et une deuxième sortie d'air comprimé (4),
- au moins un premier dispositif de soupape (23) à commande électromagnétique, un deuxième dispositif de soupape (24) à commande électromagnétique et un troisième dispositif de soupape (25) à commande électromagnétique,
- une première conduite d'air comprimé (30, 34) allant à la première sortie d'air comprimé (3) pouvant être alimentée par le biais du premier dispositif de soupape (23) en air fourni à l'entrée d'air comprimé (2),
- une deuxième conduite d'air comprimé (31, 35) allant à la deuxième sortie d'air comprimé (4) pouvant être alimentée par le biais du deuxième dispositif de soupape (24) en air comprimé fourni au niveau de l'entrée d'air comprimé (2),
- la première conduite d'air comprimé (30, 34) pouvant être alimentée en air par le biais du premier dispositif de soupape (23) lorsque le premier dispositif de soupape (23) n'est pas alimenté en courant et que le troisième dispositif de soupape (25) est alimenté en courant, et la deuxième conduite d'air comprimé (31, 35) pouvant être alimentée en air par le biais du deuxième dispositif de soupape (24) lorsque le deuxième dispositif de soupape (24) n'est pas alimenté en courant et que le troisième dispositif de soupape (25) est alimenté en courant, et
- la première conduite d'air comprimé (30, 34) pouvant être connectée à une autre conduite d'air comprimé (27) par le biais du troisième dispositif de soupape (25) lorsque le premier dispositif de soupape (23) n'est pas alimenté en courant et que le troisième dispositif de soupape (25) n'est pas alimenté en courant, et la première conduite d'air comprimé (30, 34) pouvant être connectée à cette autre conduite d'air comprimé (27) lorsque le deuxième dispositif de soupape (24) n'est pas alimenté en courant et que le troisième dispositif de soupape (25) n'est pas alimenté en courant,
en tant que modulateur de frein de stationnement selon l'une quelconque des revendications 1 à 12, pour la commande d'une fonction de frein de stationnement.

14. Utilisation selon la revendication 13, dans laquelle l'autre conduite d'air comprimé (27) est utilisée en tant que conduite d'évacuation pour évacuer la première conduite d'air comprimé (30) et la deuxième conduite d'air comprimé (31) par le biais du troisième dispositif de soupape (25).
